# EUROPEAN PATENT APPLICATION

(11) **EP 4 765 352 A1**
(43) Date of publication of application: **24.06.2026**
(21) Application number: 25213564.5
(22) Date of filing: 05.11.2025
(51) Int. Cl.: H01M 50/103, H01M 50/15, H01M 50/209, H01M 50/271, H01M 50/30

(54) **SECONDARY BATTERY AND BATTERY PACK INCLUDING THE SAME**

(30) Priority: 19.12.2024 KR 20240191404
(71) Applicant: SAMSUNG SDI CO., LTD., Yongin-si, Gyeonggi-do 17084 (KR)
(72) Inventor: KIM, Sang Myeong, 16678 Suwon-si (KR)
(74) Representative: Marks & Clerk LLP

(57) **Abstract**

A secondary battery and a battery pack including the same are disclosed. The secondary battery includes a case, an electrode assembly accommodated in the case, a cap plate coupled to the case to seal the case and including a vent, and a venting reinforcement part on the cap plate and spaced apart from the vent.

## Description

### BACKGROUND

### 1. Field

The present disclosure relates to a secondary battery and a battery pack including the same.

### 2. Description of the Related Art

In general, the demand for secondary batteries with high energy density and capacity has recently dramatically increased according to the rapid supply of electronic apparatuses using batteries, such as portable phones, notebook computers, and electric vehicles. Accordingly, research and development for improving performance of lithium secondary batteries are actively being conducted.

A lithium secondary battery is a battery which includes a positive electrode and a negative electrode including active materials capable of intercalation and deintercalation of lithium-ions and electrolytes and produces electric energy through oxidation and reduction reactions when lithium ions are intercalated/deintercalated at the positive electrode and negative electrode.

The above-described information disclosed in the background technology of the present disclosure is provided for improving understanding of the background of the present disclosure, and may include information that does not constitute the related art.

### SUMMARY

According to an aspect of embodiments of the present disclosure, a secondary battery, of which stiffness is improved to endure discharge pressure applied through a vent, and a battery pack including the same, are provided.

According to another aspect of embodiments of the present invention, a secondary battery in which heat transfer due to thermal runaway is prevented or substantially prevented and a battery pack including the same are provided.

However, aspects and technical problems to be solved by the present disclosure are not limited to the above-described aspects and problems to be solved, and other aspects and problems to be solved which are not mentioned, will be clearly understood by those skilled in the art from the description of the invention disclosed below.

In accordance with one aspect of the present disclosure, a secondary battery includes a case, an electrode assembly accommodated in the case, a cap plate coupled to the case to seal the case and including a vent, and a venting reinforcement part on the cap plate and spaced apart, e.g. disposed to be spaced apart, from the vent.

The venting reinforcement part may include a venting plate facing, e.g. disposed to face, the vent in a first direction, and a venting support extending from the cap plate and connected to the venting plate to support the venting plate.

The venting support may be provided as or include a plurality of venting supports spaced apart, e.g. disposed to be spaced apart, from each other in a second direction intersecting the first direction.

The venting support may extend obliquely from the cap plate.

According to another aspect of the present disclosure, a battery pack includes a housing and a plurality of secondary batteries accommodated in the housing, wherein each of the secondary batteries includes a case, an electrode assembly accommodated in the case, a cap plate coupled to the case to seal the case and including a vent, and a venting reinforcement part on the cap plate and spaced apart from the vent.

The battery pack may further include a venting pipe between, e.g. which is disposed between, the cap plate and the venting reinforcement part and which is configured to guide a flow of a fluid discharged through the vent.

The venting pipe may include a pipe body including a first surface configured to be in contact with the cap plate, and a second surface configured to be spaced apart from the first surface in a first direction and configured to be in contact with the venting reinforcement part, and a venting hole which is provided in the first surface and disposed or located to face the vent and through which a fluid discharged through the vent is to be introduced.

A width of the second surface parallel to a second direction intersecting the first direction may be smaller than a width of the first surface parallel to the second direction.

The venting hole may be provided as or include a plurality of venting holes spaced apart from each other in a third direction intersecting the first direction and the second direction.

The venting pipe may further include a fluid discharge part in, e.g. which is provided in, the pipe body and through which a fluid to be introduced through the venting hole is discharged.

The fluid discharge part may include a first fluid discharge part and a second fluid discharge part spaced apart, e.g. disposed to be spaced apart, from the first fluid discharge part in a third direction intersecting the first direction and the second direction.

The fluid discharge part may further include a third fluid discharge part in the first surface and between the first fluid discharge part and the second fluid discharge part.

The housing may include a fluid inlet through which a fluid discharged from the venting pipe is to be introduced.

The fluid inlet may include a first fluid inlet in, e.g. which is provided in, a first portion of the housing and which is adjacent to the first fluid discharge part and a second fluid inlet in the second portion of the housing which is spaced apart, e.g. disposed to be spaced apart, from the first portion in the third direction and is adjacent to the second fluid discharge part.

The fluid inlet may further include a third fluid inlet in, e.g. which is provided in, a third portion of the housing between, e.g. disposed between, the first portion and the second portion and which faces or is configured to face the third fluid discharge part.

The battery pack may further include a fixing part coupled to the housing to fix the venting pipe to the housing.

The fixing part may include a first connecting cover coupled to the first portion and which connects the first fluid discharge part to the first fluid inlet by covering the first fluid discharge part and the first fluid inlet and a second connecting cover which is coupled to the second portion and which connects the second fluid discharge part to the second fluid inlet by covering the second fluid discharge part and the second fluid inlet.

The fixing part may further include a fixing bracket which is coupled to the third portion and which is configured to cover the second surface.

The second surface may include a through hole, and the fixing bracket may include a protrusion, which is inserted into the through hole and located to be caught by the through hole.

At least some of the above and other features of the invention are set out in the claims.

### BRIEF DESCRIPTION OF THE DRAWINGS

The following drawings provided with this specification illustrate some embodiments of the present invention and, together with the detailed description of the invention to be described below, are provided for further understanding of the technical idea of the present invention; however, the present invention is not to be construed as being limited to matters described in such drawings, in which:
FIG. 1 is a schematic perspective view illustrating a configuration of a secondary battery according to an embodiment of the present invention;
FIG. 2 is a schematic exploded perspective view illustrating the configuration of the secondary battery of FIG. 1;
FIG. 3 is a schematic cross-sectional view illustrating the configuration of the secondary battery of FIG. 1;
FIG. 4 is a schematic perspective view illustrating a configuration of a battery pack according to an embodiment of the present invention;
FIG. 5 is a schematic exploded perspective view illustrating the configuration of the battery pack of FIG. 4;
FIG. 6 is a perspective view illustrating a venting pipe according to an embodiment of the present invention from a direction;
FIG. 7 is a perspective view illustrating the venting pipe of FIG. 6 from another direction;
FIG. 8 is an enlarged perspective view illustrating a first portion of a housing according to an embodiment of the present invention;
FIG. 9 is a cross-sectional view of the first portion of the housing of FIG. 8;
FIG. 10 is an enlarged perspective view illustrating a second portion of the housing according to an embodiment of the present invention;
FIG. 11 is a cross-sectional view of the second portion of the housing of FIG. 10;
FIG. 12 is an enlarged perspective view illustrating a third portion of the housing according to an embodiment of the present invention; and
FIG. 13 is a cross-sectional view of the third portion of the housing of FIG. 12.

### DETAILED DESCRIPTION

Herein, some example embodiments of the present invention will be described in further detail with reference to the attached drawings. The terms or words used in the present specification and claims are not to be limitedly interpreted as general or dictionary meanings and are to be interpreted as having meanings and concepts that are consistent with the technical idea of the present disclosure on the basis of the principle that an inventor can be his/her own lexicographer to appropriately define concepts of terms to describe his/her invention in the best way. Accordingly, since the embodiments disclosed in the present specification and configurations shown in the drawings are only some embodiments of the present disclosure and do not represent the entire technical scope of the present disclosure, it is to be understood that there are various equivalents and modifications which may replace them at the time of filing the present application.

Further, when used in the present specification, "comprise" or "include" and/or "comprising" or "including" specify the presence of mentioned shapes, numbers, steps, operations, members, elements, and/or groups thereof, and do not exclude the presence or addition of one or more other shapes, numbers, steps, operations, members, elements, and/or groups thereof.

Further, for understanding of the present disclosure, the accompanying drawings may not be drawn to actual scale, and the sizes of some components may be exaggerated. In addition, the same reference numerals may be given to the same components in different embodiments.

The mention that two objects to be compared are "the same" means that that the two objects are the same or substantially the same. Accordingly, "the same" or "substantially the same" may include a deviation considered as a low level in the art, for example, a deviation within 5%. Further, uniformity of a parameter in a certain region may mean uniformity from an average point of view.

Although "first," "second," and the like may be used to describe various components, it is to be understood that these components are not limited by these terms. These terms are used to distinguish one component from another component, and, unless otherwise stated, it is to be understood that the first component may be the second component.

Throughout the specification, unless otherwise stated, each component may be singular or plural.

The placement of an arbitrary component on the "upper portion (or lower portion)" of a component or "above (or below)" of a component may mean not only that the arbitrary component is disposed in contact with an upper surface (or a lower surface) of the component, but also that another component may be interposed between the component and the arbitrary component disposed above (or below) the component.

Further, when it is disclosed that a certain component is "on," "connected to," or "coupled to" another component, it is to be understood that the components may be directly connected or coupled to each other, but another component may be "interposed" between the components, or the components may be "connected," "coupled," or "linked" through another component.

As used in the present specification, the term "and/or" includes any one or more and all combinations of the related listed items. Further, when embodiments of the present disclosure are described, the use of "may" relates to "one or more embodiments of the present disclosure." The term "one or more" before a list of elements modifies an entire list of the elements and does not modify individual elements in the list.

Throughout the specification, "A and/or B" means to A, B, or A and B unless otherwise stated, and "C to D" means greater than or equal to C and less than or equal to D unless otherwise specified.

When phrases such as "at least one of A, B, and C," "at least one of A, B, or C," "at least one selected from group A, B, and C," or "at least one selected from A, B, and C" are used to specify a list of elements A, B, and C, the phrases may refer to any one of all suitable combinations.

The term "use" may be considered to be synonymous with the term "utilize." As used in the present specification, the terms "substantially," "about," and other similar terms are used as terms of approximation rather than terms of degrees, and are intended to consider an inherent variation in measured or calculated values to be recognized by those skilled in the art.

Although the terms "first," "second," "third," and the like may be used in the present specification to describe various elements, components, regions, layers and/or sections, these elements, components, regions, layers and/or sections are not to be limited by these terms. These terms are used to distinguish one element, component, region, drawing layer, or section from another element, component, region, drawing layer, or section. Accordingly, a first element, component, region, layer, or section to be described below may be referred to a second element, component, region, layer, or section without departing from the teachings of the present disclosure.

Spatially related terms such as "beneath," "below," "lower," "above," and "upper" are used for description of the relationship of one element or feature to another element or feature shown in the drawings. These spatially related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept which may encompass "above" or "below."

The terms used in the present specification are intended to describe embodiments of the present disclosure, and are not intended to limit the present disclosure.

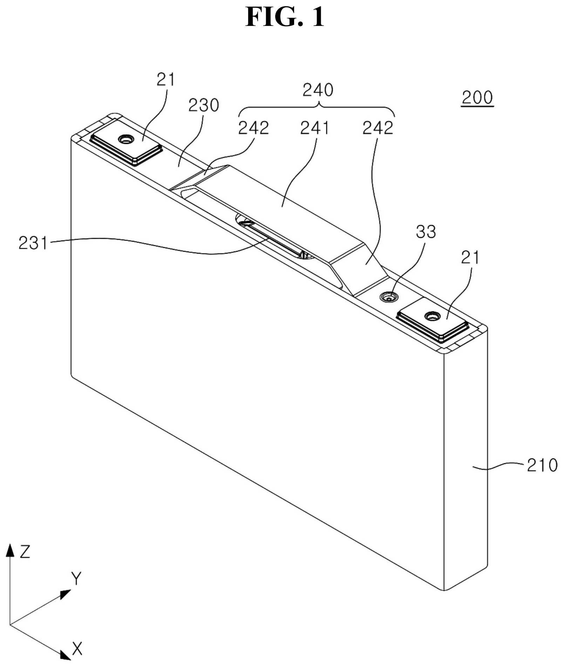

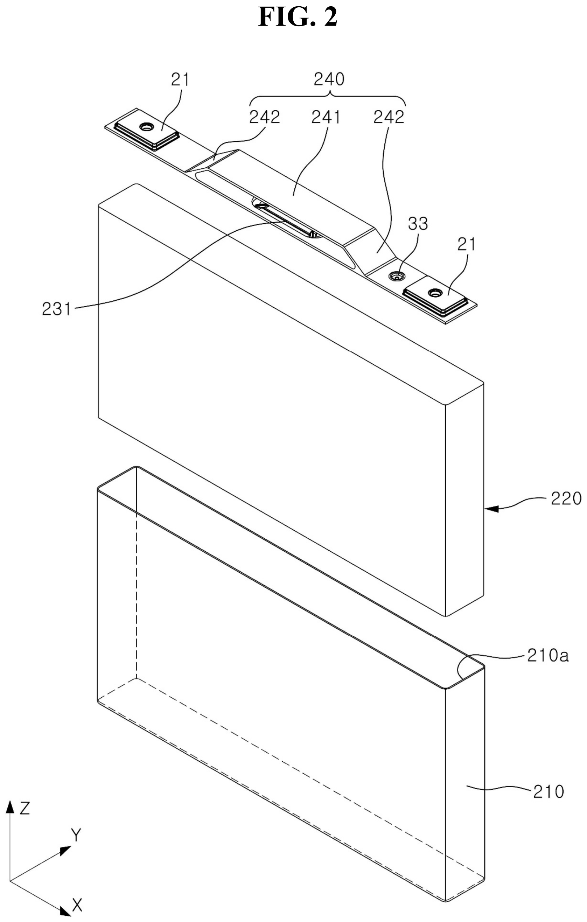

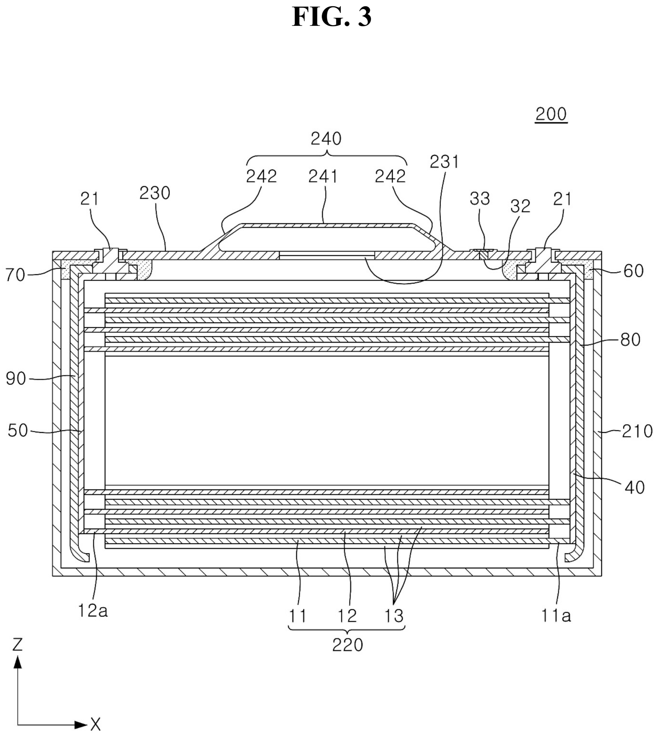

FIG. 1 is a schematic perspective view illustrating a configuration of a secondary battery 200 according to an embodiment of the present invention; FIG. 2 is a schematic exploded perspective view illustrating the configuration of the secondary battery 200 of FIG. 1; and FIG. 3 is a schematic cross-sectional view illustrating the configuration of the secondary battery 200 of FIG. 1.

The secondary battery 200 may function as a unit structure which stores and supplies power in a battery pack. Herein, an example of a prismatic lithium-ion secondary battery 200 will be described as the secondary battery 200. However, the present invention is not limited thereto, and the secondary battery 200 may be a lithium polymer battery or cylindrical battery, for example.

A first direction which will be described below may be a Z-axis direction, that is, a height direction of the secondary battery 200, based on FIGS. 1 and 2, a second direction may be an X-axis direction, that is, a longitudinal direction of the secondary battery 200, based on FIGS. 1 and 2, and a third direction may be a Y-axis direction, that is, a width direction of the secondary battery 200, based on FIGS. 1 and 2.

Referring to FIGS. 1 to 3, the secondary battery 200 according to an embodiment of the present invention may include a case 210, an electrode assembly 220, a cap plate 230, and a venting reinforcement part 240.

The case 210 may form an exterior (e.g., an entire exterior) of the secondary battery 200 and may be formed of a conductive metal, such as steel coated with aluminum, an aluminum alloy, or nickel. In addition, the case 210 may provide a space for accommodating the electrode assembly 220 which will be described below.

In an embodiment, the case 210 may be formed in a box shape in which an inner portion is empty and an opening 210a is formed in an outer surface of the case 210. For example, the opening 210a formed in the case 210 may be disposed to face upward based on FIG. 2.

The electrode assembly 220 may be accommodated in the case 210. In the electrode assembly 220, a separator 13, which is an insulator, may be interposed between a positive electrode 11 and a negative electrode 12, and the positive electrode 11, the negative electrode 12, and the separator 13 may be wound.

The positive electrode 11 and the negative electrode 12 may include coated portions which are regions in which current collectors 40, 50 each formed of a thin metal foil are coated with an active material, and non-coated portions 11a, 12a which are regions in which the current collectors are not coated with the active material.

The separator 13 which is the insulator may be interposed between the positive electrode 11 and the negative electrode 12, and then the positive electrode 11 and the negative electrode 12 may be wound. However, the present invention is not limited thereto, and, in an embodiment, the electrode assembly 220 may be formed as a structure in which the positive electrode 11 and the negative electrode 12 which are formed of a plurality of sheets are alternately stacked with the separator 13 interposed therebetween.

The cap plate 230 may be coupled to the case 210. The cap plate 230 may cover the opening 210a included in the case 210 to seal the case 210. The cap plate 230 may be formed of a conductive material.

The cap plate 230 may be formed of a thin plate and coupled to the opening 210a of the case 210. The cap plate 230 may be fixed to the case 210 through any of various types of coupling methods, such as any of bolting, welding, and fitting.

The cap plate 230 may be disposed to face the electrode assembly 220 in a direction parallel to the first direction. The cap plate 230 may be disposed to be spaced apart from the electrode assembly 220 in the first direction. An electrolyte injection port 32 on which a sealing stopper 33 may be installed may be formed in the cap plate 230.

An electrode terminal 21 electrically connected to the positive electrode 11 or the negative electrode 12 of the electrode assembly 220 may be installed to pass through the cap plate 230 and protrude outward. The electrode terminal 21 may be provided on an upper surface of the secondary battery 200. The electrode terminal 21 may protrude from the cap plate 230 in the first direction.

In an embodiment, an outer circumferential surface of an upper column of the electrode terminal 21 protruding from the cap plate 230 may be screw-processed and may be fixed to the cap plate 230 by a nut. However, the present invention is not limited thereto, and, in an embodiment, the electrode terminal 21 may be formed as a rivet structure and coupled thereto using a rivet or may be coupled to the cap plate 230 by welding.

In an embodiment, the electrode terminal 21 may be provided as a pair of electrode terminals 21. In an embodiment, the pair of electrode terminals 21 may be symmetrically disposed at both sides of the cap plate 230. The pair of electrode terminals 21 may be disposed to be spaced apart from each other in the second direction. The pair of electrode terminals 21 may have different polarities.

The electrode terminals 21 may be electrically connected to the current collectors including first and second current collectors 40, 50 (herein, positive and negative current collectors) bonded to the positive non-coated portion 11a or the negative non-coated portion 12a by welding.

For example, the electrode terminals 21 may be coupled to the positive and negative current collectors 40, 50 by welding. However, the present invention is not limited thereto, and, in an embodiment, the electrode terminals 21 may be formed to be integrally coupled to the positive and negative current collectors 40, 50.

In an embodiment, an insulation member may be formed between the electrode assembly 220 and the cap plate 230. In this case, the insulation member may include first and second lower insulation members 60, 70, and each of the first and second lower insulation members 60, 70 may be installed between the electrode assembly 220 and the cap plate 230.

According to an embodiment, an end of a separation member, which may be installed to face a side surface of the electrode assembly 220, may be installed between the insulation member and the electrode terminal 21. The separation member may include first and second separation members 80, 90.

Accordingly, ends of the first and second separation members 80, 90, which may be installed to face a side surface of the electrode assembly 220, may be formed between the first and second lower insulation members 60, 70 and the electrode terminal 21.

Accordingly, the electrode terminals 21 coupled to the positive and negative current collectors 40, 50 by welding may be coupled to ends of the first and second lower insulation members 60, 70 and ends of the first and second separation members 80, 90.

The cap plate 230 according to an embodiment may include a vent 231. The vent 231 in which a notch is formed may be installed in the cap plate 230. The vent 231 may be disposed between the pair of electrode terminals 21.

The vent 231 may be opened or closed in conjunction with a change in pressure in the case 210. That is, the vent 231 may maintain a closed state and seal the case 210 when the electrode assembly 220 operates normally.

The vent 231 may be opened as an internal pressure of the case 210 increases to be greater than or equal to a set pressure due to overcharging, fire, etc., and a fluid, such as flame or gas, may be discharged to the outside of the case 210 from the case 210 through the vent 231.

The venting reinforcement part 240 may be provided on the cap plate 230. As an example, the venting reinforcement part 240 may be integrally provided with the cap plate 230. As another example, the venting reinforcement part 240 may be coupled to the cap plate 230. For example, the venting reinforcement part 240 may be fixed to the cap plate 230 through any of various types of coupling methods, such as any of bolting, welding, and fitting.

The venting reinforcement part 240 may be disposed to be spaced apart from the vent 231. The venting reinforcement part 240 may include a venting plate 241 and a venting support 242.

In an embodiment, the venting plate 241 may be formed in a generally plate shape having a set length. The venting plate 241 may be disposed to be spaced apart from the cap plate 230 and the vent 231. The venting plate 241 may be disposed to face the vent 231 in the first direction.

In an embodiment, the venting plate 241 may be formed in a shape extending in a direction parallel to the second direction. In an embodiment, the venting plate 241 and the cap plate 230 may be disposed parallel to each other.

The venting support 242 may be disposed between and connected to the venting plate 241 and the cap plate 230. The venting support 242 may extend from the cap plate 230 and connected to the venting plate 241 to support the venting plate 241.

The venting support 242 may be provided as a plurality of venting supports 242 disposed to be spaced apart from each other in the second direction. For example, a pair of venting supports 242 may be connected to a first side of the venting plate 241 in a longitudinal direction of the venting plate 241 parallel to the second direction and a second side of the venting plate 241 in the longitudinal direction and disposed between the vent 231 and the electrode terminals 21.

The venting support 242 may extend obliquely from the cap plate 230. The venting support 242 may extend toward the venting plate 241 at an angle (e.g., a set angle) from a location between the vent 231 and the electrode terminal 21.

An internal angle between the cap plate 230 and the venting support 242 may be an acute angle, and an internal angle between the venting plate 241 and the venting support 242 may be an obtuse angle.

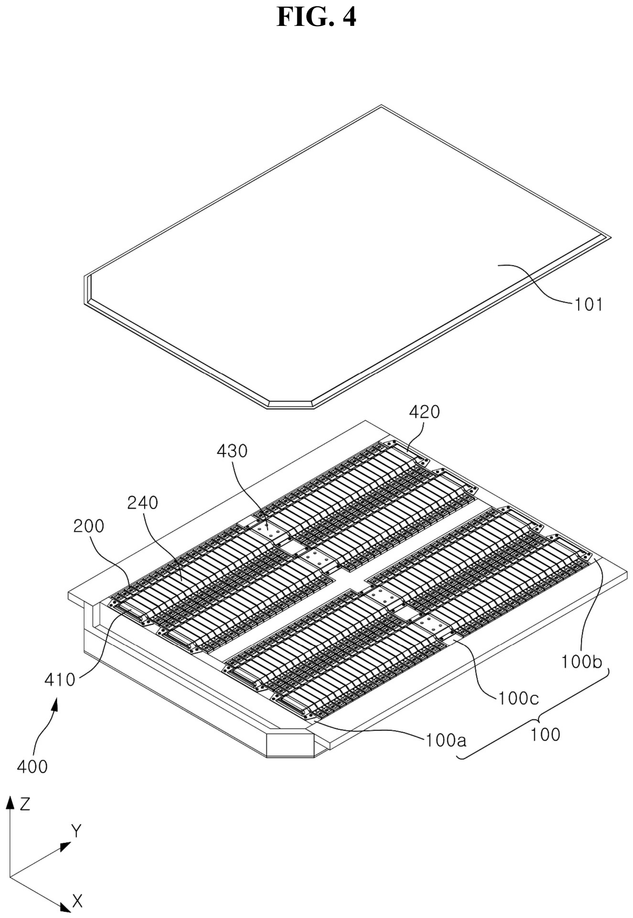

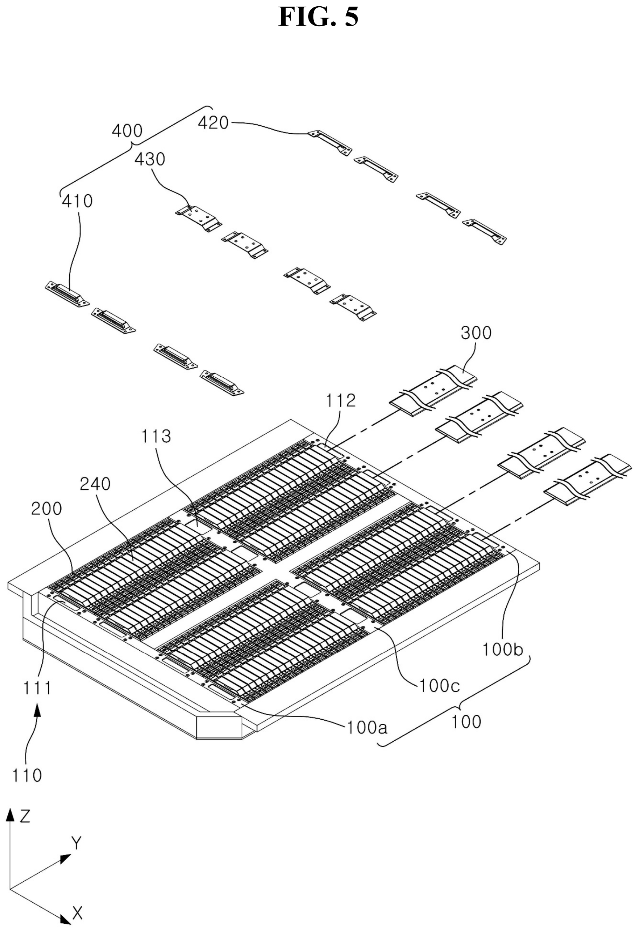

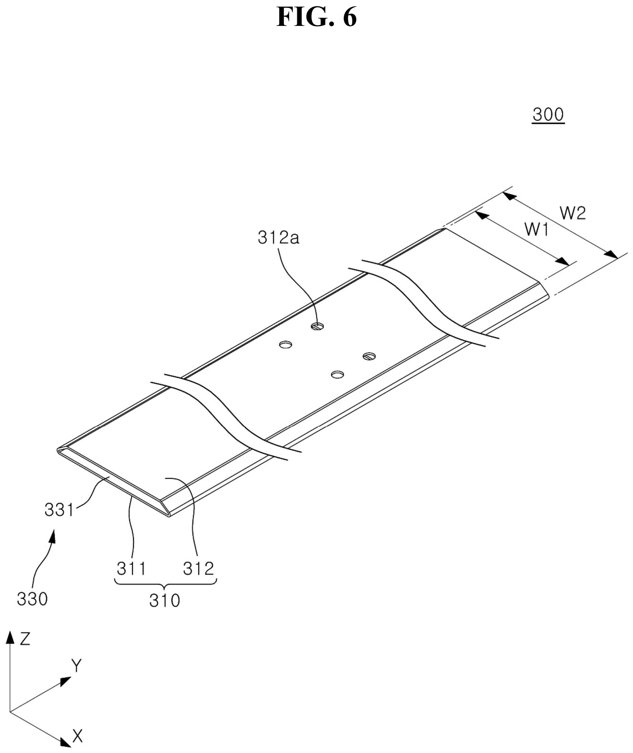

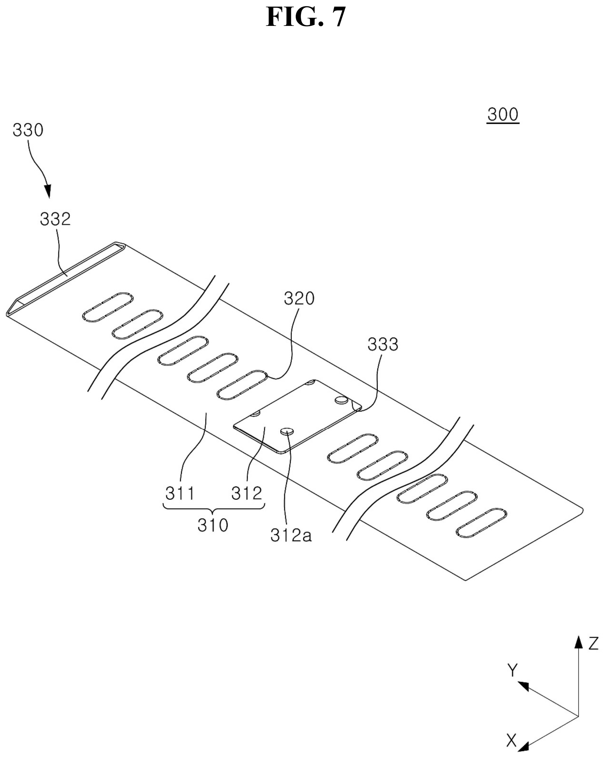

FIG. 4 is a schematic perspective view illustrating a configuration of a battery pack according to an embodiment of the present invention; and FIG. 5 is a schematic exploded perspective view illustrating the configuration of the battery pack of FIG. 4. FIG. 6 is a perspective view illustrating a venting pipe 300 according to an embodiment of the present invention from a direction; and FIG. 7 is a perspective view illustrating the venting pipe 300 of FIG. 6 from another direction.

Referring to FIGS. 4 to 7, the battery pack according to an embodiment of the present invention includes a housing 100 and the secondary battery 200.

The housing 100 may support the secondary battery 200 and protect the secondary battery 200 from external impact and foreign matter. The housing 100 may provide a space for accommodating the secondary battery 200.

The housing 100 may have a hollow box shape of which a side is open. For example, the open side of the housing 100 may be disposed to face upward based on FIG. 4.

However, a cross-sectional shape of the housing 100 is not limited to the quadrangular shape illustrated in FIG. 4, and a shape thereof may be varied to any of various shapes, such as any of polygonal, circular, and elliptical shapes.

The housing 100 according to an embodiment may include a first portion 100a, a second portion 100b, and a third portion 100c.

The first portion 100a of the housing 100 may be a first side edge of the housing 100 in a longitudinal direction parallel to the third direction.

The second portion 100b may be disposed to be spaced apart from the first portion 100a of the housing 100. The second portion 100b may be disposed to be spaced apart from the first portion 100a in the third direction. The second portion 100b may be a second side edge of the housing 100 in the longitudinal direction parallel to the third direction.

The third portion 100c of the housing 100 may be disposed between the first portion 100a and the second portion 100b. The third portion 100c may be disposed in the housing 100 in a width direction parallel to the second direction. The third portion 100c may be a partition of the housing 100 which divides an inner space in which the secondary battery 200 is accommodated.

The battery pack according to an embodiment may further include a housing cover 101 which is coupled to the housing 100 to close the inner space of the housing 100. The housing cover 101 may be formed in a generally plate shape and disposed to face the open side of the housing 100. The housing cover 101 may be disposed to face an upper surface of the housing 100.

The housing cover 101 may be fixed to an upper end portion of the housing 100 through any of various types of coupling methods, such as any of bolting, welding, and fitting.

The secondary battery 200 may be disposed in the housing 100. The secondary battery 200 may be provided as a plurality of secondary batteries 200. The plurality of secondary batteries 200 may be disposed in a plurality of rows in the housing 100.

The plurality of secondary batteries 200 may be disposed in two or more rows in either of a direction parallel to the longitudinal direction (a direction parallel to a Y-axis based on FIG. 4) of the housing 100 and the width direction (a direction parallel to an X-axis based on FIG. 4) of the housing 100. However, an arrangement shape of the plurality of secondary batteries 200 is not limited thereto, and a shape thereof may be any of various shapes.

The plurality of secondary batteries 200 may be disposed parallel to each other. A number of the secondary batteries 200 may be varied according to a size, a shape, etc., of the housing 100.

The plurality of secondary batteries 200 may be electrically connected to each other. For example, adjacent secondary batteries 200 may be connected through a busbar (not shown) in series or in parallel.

The busbar may be formed of an electrically conductive material, such as copper, aluminum, or nickel. A shape of the busbar may be any of various shapes capable of electrically connecting the adjacent secondary batteries 200.

The battery pack may further include the venting pipe 300. The venting pipe 300 may be formed in a hollow shape having a length (e.g., a set length).

The venting pipe 300 may be disposed between the cap plate 230 and the venting reinforcement part 240. The venting pipe 300 may be disposed in a direction parallel to the third direction. The venting pipe 300 may be formed to have a shape extending in the direction parallel to the third direction.

The venting pipe 300 may guide the flow of a fluid discharged through the vent 231. In this case, an example of the fluid may be flame, gas, etc., discharged to the outside of the secondary battery 200 through the vent 231 if an event of the secondary battery 200 occurs.

The venting pipe 300 may include a pipe body 310 and a venting hole 320.

The pipe body 310 may form an exterior (e.g., an entire exterior) of the venting pipe 300, and a flow path through which the fluid flows may be provided in the pipe body 310. The flow path may be formed in a longitudinal direction of the pipe body 310 parallel to the third direction.

The pipe body 310 may include a first surface 311 and a second surface 312.

The first surface 311 of the pipe body 310 may be formed in a generally plate shape. The first surface 311 may be disposed to face the cap plate 230. The first surface 311 may be in contact with the cap plate 230.

The second surface 312 of the pipe body 310 may be disposed to be spaced apart from the first surface 311. The second surface 312 may be disposed to be spaced apart from the first surface 311 in the first direction. The second surface 312 may be formed in a generally plate shape. In an embodiment, the first surface 311 and the second surface 312 may be disposed parallel to each other.

The second surface 312 of the pipe body 310 may be in contact with the venting reinforcement part 240. In an embodiment, the second surface 312 may be in contact with the venting plate 241. In an embodiment, a width W1 of the second surface 312 parallel to the second direction may be smaller than a width W2 of the first surface 311 parallel to the second direction.

The venting hole 320 may be provided in the first surface 311 of the pipe body 310. The venting hole 320 may be formed to pass through the first surface 311 in the first direction. The venting hole 320 may be provided as a plurality of venting holes 320 disposed to be spaced apart from each other in the third direction.

The first surface 311 of the pipe body 310 may be disposed to face the vent 231 in the direction parallel to the first direction. Accordingly, the fluid discharged through the vent 231 can be introduced into the pipe body 310 through the venting hole 320.

The venting pipe 300 according to an embodiment may further include a fluid discharge part 330.

The fluid discharge part 330 may be provided in the pipe body 310. The fluid introduced through the venting hole 320 may be discharged through the fluid discharge part 330. The fluid introduced into the pipe body 310 through the venting hole 320 may flow to the fluid discharge part 330 through the flow path provided in the pipe body 310 and be discharged to the outside of the pipe body 310 through the fluid discharge part 330.

The fluid discharge part 330 may include a first fluid discharge part 331 and a second fluid discharge part 332.

The first fluid discharge part 331 may be provided in a first side of the pipe body 310 in the longitudinal direction parallel to the third direction. The first fluid discharge part 331 may be formed to pass through the first side of the pipe body 310 in the direction parallel to the third direction. The first fluid discharge part 331 may be disposed adjacent to the first portion 100a of the housing 100.

The second fluid discharge part 332 may be disposed to be spaced apart from the first fluid discharge part 331. The second fluid discharge part 332 may be disposed to be spaced apart from the first fluid discharge part 331 in the third direction.

The second fluid discharge part 332 may be disposed in a second side of the pipe body 310 in the longitudinal direction parallel to the third direction. The second fluid discharge part 332 may be formed to pass through the second side of the pipe body 310 in the direction parallel to the third direction. The second fluid discharge part 332 may be disposed adjacent to the second portion 100b of the housing 100.

The fluid discharge part 330 according to an embodiment may further include a third fluid discharge part 333.

The third fluid discharge part 333 may be provided in the first surface 311 of the pipe body 310 and disposed between the first fluid discharge part 331 and the second fluid discharge part 332.

The third fluid discharge part 333 may be formed to pass through the first surface 311 in the first direction. The third fluid discharge part 333 may be disposed to face the third portion 100c of the housing 100 in the first direction.

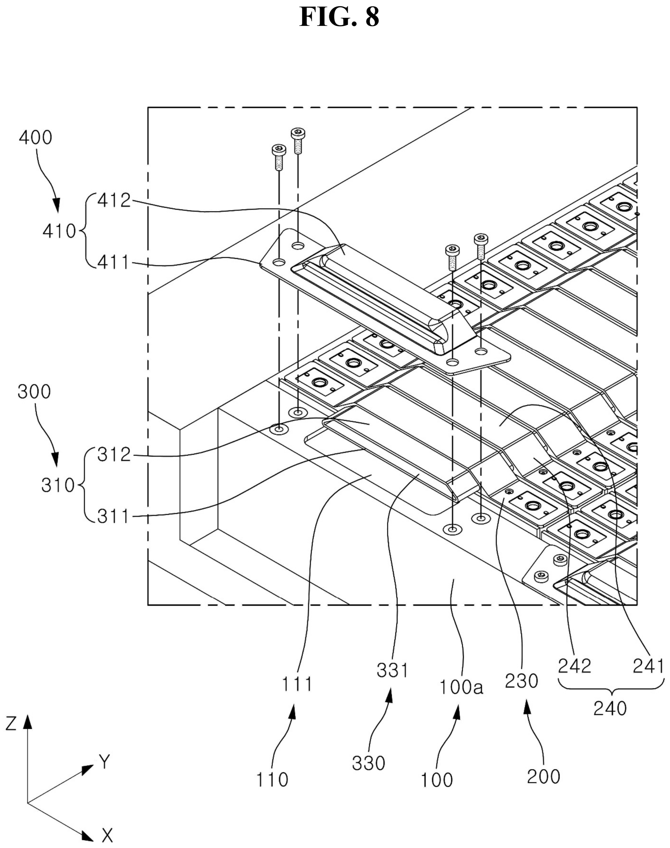

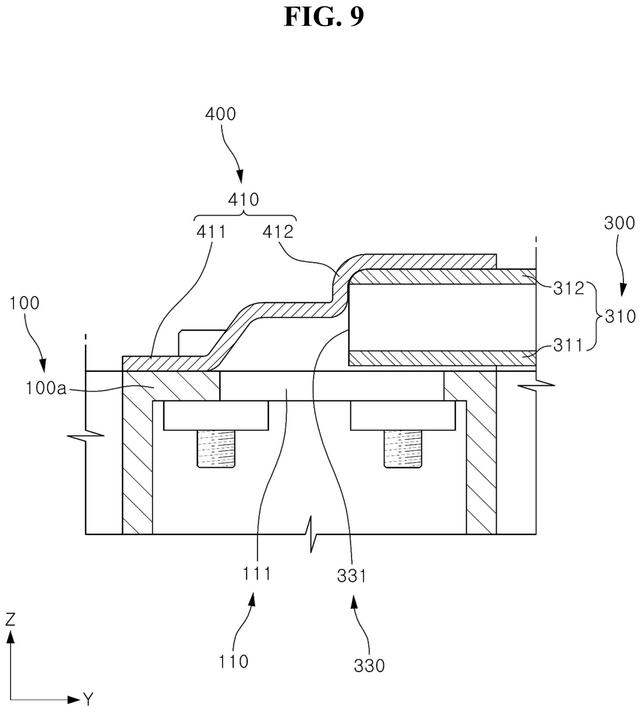

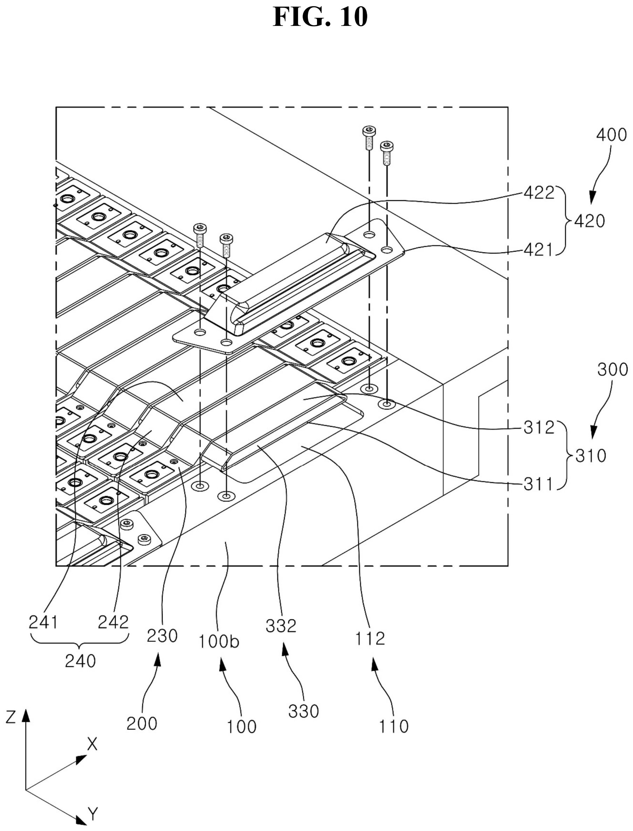

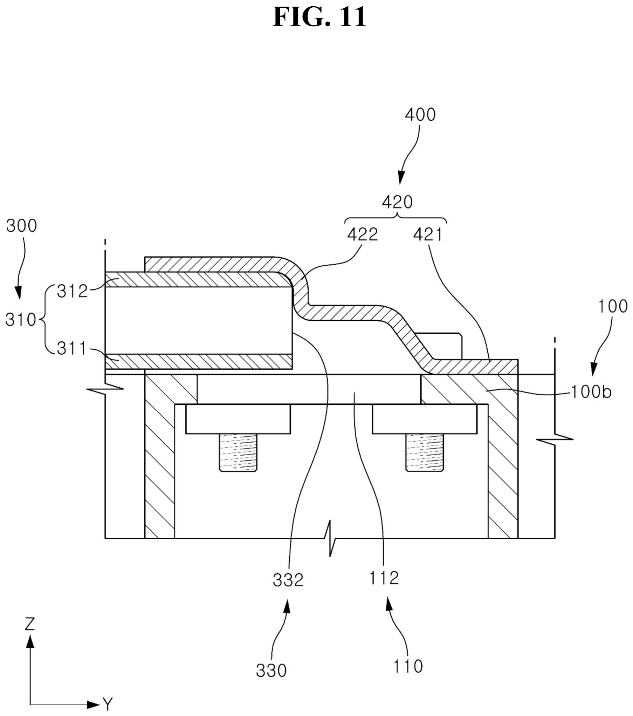

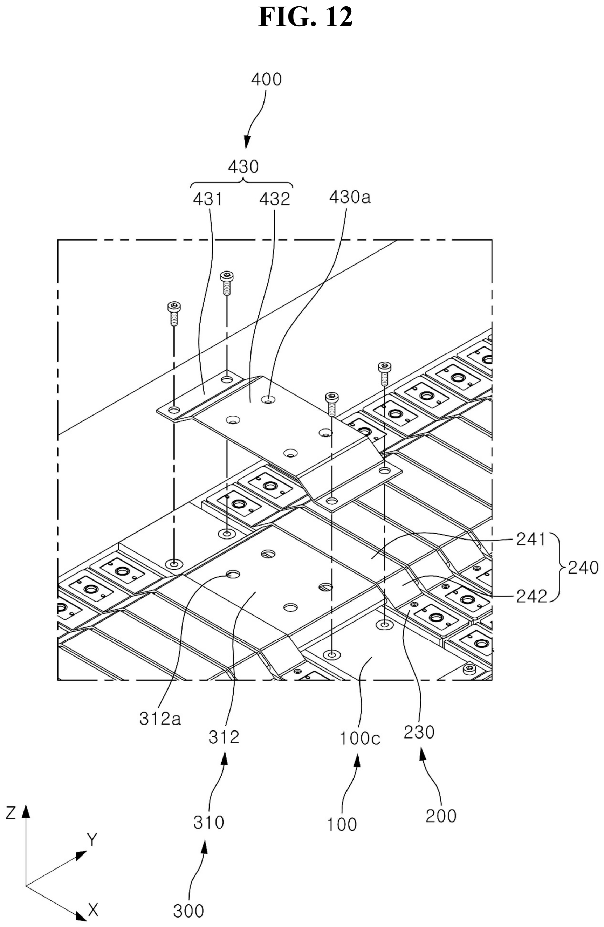

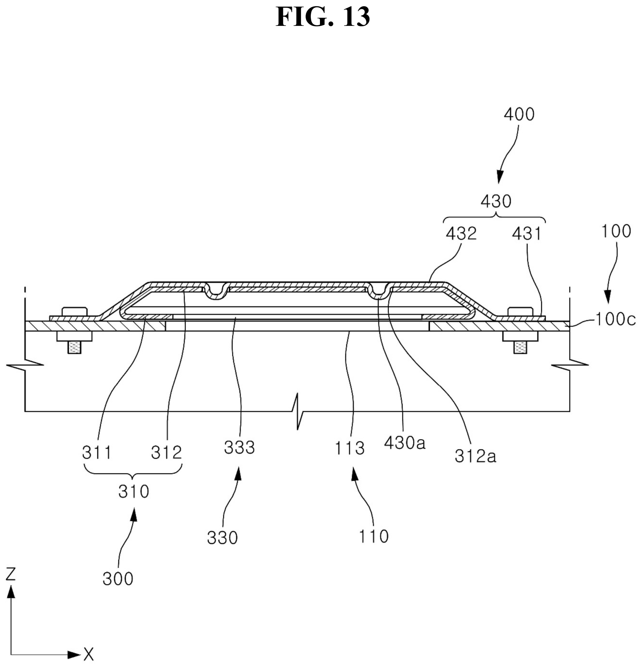

FIG. 8 is an enlarged perspective view illustrating a first portion 100a of the housing 100 according to an embodiment of the present invention; and FIG. 9 is a cross-sectional view of the first portion of the housing 100 of FIG. 8. FIG. 10 is an enlarged perspective view illustrating a second portion 100b of the housing 100 according to an embodiment of the present invention; and FIG. 11 is a cross-sectional view of the second portion 100b of the housing 100 of FIG. 10. FIG. 12 is an enlarged perspective view illustrating a third portion 100c of the housing 100 according to an embodiment of the present invention; and FIG. 13 is a cross-sectional view of the third portion 100c of the housing 100 of FIG. 12.

Referring to FIGS. 8 to 13, a fluid inlet 110 may be provided in the housing 100 according to an embodiment. The fluid discharged through the venting pipe 300 may be introduced into the fluid inlet 110.

The fluid inlet 110 may include a first fluid inlet 111 and a second fluid inlet 112.

The first fluid inlet 111 may be provided in the first portion 100a of the housing 100. As an example, the first fluid inlet 111 may be formed having a groove shape formed to be concave from the first portion 100a in the direction parallel to the first direction. As another example, the first fluid inlet 111 may be formed having a hole shape passing through the first portion 100a in the direction parallel to the first direction.

The first fluid inlet 111 may be adjacent to the first fluid discharge part 331 formed in the pipe body 310. The first fluid discharge part 331 may communicate with the first fluid inlet 111. The fluid discharged through the first fluid discharge part 331 may be introduced into the first fluid inlet 111.

The second fluid inlet 112 may be provided in the second portion 100b of the housing 100. As an example, the second fluid inlet 112 may be formed having a groove shape formed to be concave in the second portion 100b in the direction parallel to the first direction. As another example, the second fluid inlet 112 may be formed having a hole shape passing through the second portion 100b in the direction parallel to the first direction.

The second fluid inlet 112 may be adjacent to the second fluid discharge part 332 formed in the pipe body 310. The second fluid discharge part 332 may communicate with the second fluid inlet 112. The fluid discharged through the second fluid discharge part 332 may be introduced into the second fluid inlet 112.

The fluid inlet 110 according to an embodiment may further include a third fluid inlet 113.

The third fluid inlet 113 may be provided in the third portion 100c of the housing 100. As an example, the third fluid inlet 113 may be formed having a groove shape formed to be concave in the third portion 100c in the direction parallel to the first direction. As another example, the third fluid inlet 113 may be formed having a hole shape passing through the third portion 100c in the direction parallel to the first direction.

The third fluid inlet 113 may face the third fluid discharge part 330 formed in the pipe body 310. The third fluid discharge part 330 may be disposed to face the third fluid inlet 113 in the first direction. The third fluid discharge part 330 may communicate with the third fluid inlet 113. The fluid discharged through the third fluid discharge part 330 may be introduced into the third fluid inlet 113.

The battery pack according to an embodiment may further include a fixing part 400.

The fixing part 400 may be coupled to the housing 100 to fix the venting pipe 300 to the housing 100. In an embodiment, the fixing part 400 may be coupled to the housing 100 using a bolt to fix a location of the pipe body 310.

The fixing part 400 may include a first connecting cover 410 and a second connecting cover 420.

The first connecting cover 410 may be coupled to the first portion 100a of the housing 100. The first connecting cover 410 may connect the first fluid discharge part 331 to the first fluid inlet 111 by covering the first fluid discharge part 331 and the first fluid inlet 111.

The first connecting cover 410 may include a first flange 411 seated in the first portion 100a and coupled to the first portion 100a using a bolt and a first cover 412 which covers the first fluid discharge part 331 and the first fluid inlet 111.

The first cover 412 may be formed to have a shape of which a side is open and in which an inner space is provided. The first flange 411 may extend from an edge of the first cover 412.

The first cover 412 may be formed to have a shape protruding from the first flange 411 in the first direction.

The first cover 412 may be in contact with the second surface 312 of the pipe body 310. The first cover 412 may be formed in a shape surrounding a portion of the pipe body 310 at which the first fluid discharge part 331 is located. As the first fluid discharge part 331 and the first fluid inlet 111 are connected through the first cover 412, the fluid may flow from the first fluid discharge part 331 to the first fluid inlet 111 through an inner portion of the first cover 412.

The first cover 412 parallel to the third direction may be formed to have a shape in which a length decreases (e.g., gradually decreases) in the first direction. Accordingly, the first cover 412 may limit movement of the pipe body 310 in the direction parallel to the third direction without closing the first fluid discharge part 331.

The second connecting cover 420 may be coupled to the second portion 100b of the housing 100. The second connecting cover 420 may connect the second fluid discharge part 332 to the second fluid inlet 112 by covering the second fluid discharge part 332 and the second fluid inlet 112.

The second connecting cover 420 may include a second flange 421 seated on the second portion 100b and coupled to the second portion 100b using a bolt and a second cover 422 which covers both the second fluid discharge part 332 and the second fluid inlet 112.

The second cover 422 may be formed to have a shape of which a side is open and in which an inner space is provided. The second flange 421 may extend from an edge of the second cover 422.

The second cover 422 may be formed to have a shape protruding from the second flange 421 in the first direction.

The second cover 422 may be in contact with the second surface 312 of the pipe body 310. The second cover 422 may be formed to have a shape surrounding a portion of the pipe body 310 at which the second fluid discharge part 332 is located. As the second fluid discharge part 332 and the second fluid inlet 112 are connected through the second cover 422, the fluid may flow from the second fluid discharge part 332 to the second fluid inlet 112 through the inner portion of the second cover 422.

The second cover 422 parallel to the third direction may be formed to have a shape in which a length decreases (e.g., gradually decreases) in the first direction. Accordingly, the second cover 422 may limit movement of the pipe body 310 in the direction parallel to the third direction without closing the second fluid discharge part 332.

The fixing part 400 according to an embodiment may further include a fixing bracket 430.

The fixing bracket 430 may be coupled to the third portion 100c of the housing 100. The fixing bracket 430 may cover the second surface 312 of the pipe body 310.

The fixing bracket 430 may include a third flange 431 seated on the third portion 100c and coupled to the third portion 100c using a bolt and a third cover 432 which extends from the third flange 431 and covers the second surface 312. The third cover 432 may be seated on the pipe body 310 and be in contact with the second surface 312.

A through hole 312a may be provided in the second surface 312 of the pipe body 310 according to an embodiment. The through hole 312a may be formed to pass through the second surface 312 in the first direction. The through hole 312a may be provided as a plurality of through holes 312a, and the plurality of through holes 312a may be disposed to be spaced apart from each other in the second surface 312.

A protrusion 430a may be provided on the fixing bracket 430 according to an embodiment. The protrusion 430a may be located to be inserted into and caught by the through hole 312a. The protrusion 430a may be formed to protrude from an outer surface of the third cover 432 in contact with the second surface 312 in the direction parallel to the first direction. As the protrusion 430a is inserted into the through hole 312a, the third cover 432 may be located to be caught by the pipe body 310.

According to one or more embodiments of the present invention, a venting flow path can be maintained while a venting pipe stably endures discharge pressure applied through a vent if an event occurs in a secondary battery.

However, aspects and technical effects acquirable through the present disclosure are not limited to the above-described aspects and technical effects, and other aspects and technical effects which are not mentioned will be clearly understood by those skilled in the art from the description of the invention.

Although the present disclosure has been described with reference to some embodiments shown in the drawings, these are provided as examples, and it will be understood by those skilled in the art that various modifications and equivalents are possible.

Accordingly, the technical scope of the present disclosure should be defined by the claims.

## Claims

1. A secondary battery comprising:
a case;
an electrode assembly accommodated in the case;
a cap plate coupled to the case to seal the case and comprising a vent; and
a venting reinforcement part on the cap plate and spaced apart from the vent.

2. The secondary battery as claimed in claim 1, wherein the venting reinforcement part comprises:
a venting plate facing the vent in a first direction; and
a venting support extending from the cap plate and connected to the venting plate to support the venting plate.

3. The secondary battery as claimed in claim 2, wherein the venting support comprises a plurality of venting supports spaced apart from each other in a second direction intersecting the first direction.

4. The secondary battery as claimed in claim 2 or 3, wherein the venting support extends obliquely from the cap plate.

5. A battery pack comprising:
a housing; and
a plurality of the secondary batteries according to any preceding claim accommodated in the housing.

6. The battery pack as claimed in claim 5, further comprising a venting pipe between the cap plate and the venting reinforcement part and configured to guide a flow of a fluid discharged through the vent.

7. The battery pack as claimed in claim 6, wherein the venting pipe comprises:
a pipe body comprising a first surface to be in contact with the cap plate, and a second surface spaced apart from the first surface in a first direction and to be in contact with the venting reinforcement part; and
a venting hole in the first surface to face the vent and through which a fluid discharged through the vent is to be introduced.

8. The battery pack as claimed in claim 7, wherein a width of the first surface parallel to a second direction intersecting the first direction is greater than a width of the second surface parallel to the second direction.

9. The battery pack as claimed in claim 8, wherein the venting hole comprises a plurality of venting holes spaced apart from each other in a third direction intersecting the first direction and the second direction.

10. The battery pack as claimed in claim 7, 8 or 9, wherein the venting pipe further comprises a fluid discharge part in the pipe body and through which a fluid to be introduced through the venting hole is discharged.

11. The battery pack as claimed in claim 10, wherein the fluid discharge part comprises:
a first fluid discharge part; and
a second fluid discharge part spaced apart from the first fluid discharge part in a third direction intersecting the first direction and the second direction.

12. The battery pack as claimed in claim 11, wherein the fluid discharge part further comprises a third fluid discharge part in the first surface and located between the first fluid discharge part and the second fluid discharge part.

13. The battery pack as claimed in any one of claims 6 to 12, wherein the housing comprises a fluid inlet through which a fluid discharged from the venting pipe is to be introduced.

14. The battery pack as claimed in claim 13, wherein the fluid inlet comprises:
a first fluid inlet in a first portion of the housing and adjacent to the first fluid discharge part; and
a second fluid inlet in the second portion of the housing spaced apart from the first portion in the third direction, and adjacent to the second fluid discharge part.

15. The battery pack as claimed in claim 14, wherein the fluid inlet further comprises a third fluid inlet in a third portion of the housing between the first portion and the second portion, and facing the third fluid discharge part.
